# EUROPÄISCHE PATENTANMELDUNG

(11) **EP 0 863 637 A2**
(43) Veröffentlichungstag der Anmeldung: **09.09.1998**
(21) Anmeldenummer: 98102922.6
(22) Anmeldetag: 19.02.1998
(51) Int. Cl.: H04L 12/12, H04B 10/20, B60R 16/02

(54) **Kommunikationseinrichtung mit optischem Bus und Verfahren zu deren Betriebssteuerung**

(30) Priorität: 05.03.1997 DE 19708979
(71) Anmelder: NOKIA MOBILE PHONES LTD., 02150 Espoo (FI)
(72) Erfinder: Brisse, Konrad, 45527 Hattingen (DE); Hedrich, Jens, 44789 Bochum (DE)
(74) Vertreter: TER MEER STEINMEISTER & PARTNER GbR

(57) **Zusammenfassung**

Eine elektronische Kommunikationseinrichtung enthält wenigstens zwei über einen optischen Bus (4) miteinander verbundene Module (7, 8). In einem Energiesparmodus wird jedes der Module (7, 8) mit einer für alle Module (7, 8) selben Abtastperiode (P) und über ein gegenüber dieser Abtastperiode (P) kleines Zeitintervall (T) auf Empfang geschaltet. Eines dieser Module (7, 8) sendet ein Interrupt-Signal (I) auf den optischen Bus (4), dessen Dauer gleich der oder größer als die Abtastperiode (P) ist. Das andere Modul (7, 8) wird spätestens beim Empfang des Interrupt-Signals (I) im nächstfolgenden Abtastzeitintervall auf permanenten Empfang umgeschaltet, so daß anschließend eine Datenkommunikation über den optischen Bus (4) erfolgen kann.

## Beschreibung

Die Erfindung bezieht sich auf ein Verfahren zur Steuerung einer elektronischen Einrichtung gemäß dem Anspruch 1, die mehrere über einen optischem Bus miteinander verbundene Module aufweist, sowie auf eine elektronische Einrichtung gemäß dem Anspruch 13 mit mehreren Modulen, die zur Datenkommunikation über einen optischen Bus miteinander verbunden sind.

In Kraftfahrzeugen werden häufig integrierte Informations- und Kommunikationseinrichtungen oder auch Navigationseinrichtungen aus Platzgründen in zwei oder mehrere Module aufgeteilt, da die Benutzerschnittstellen in Reichweite des Fahrers liegen müssen, dort aber nicht die gesamte Informations- und Kommunikationseinrichtung untergebracht werden kann. Der größte Teil der Einrichtung wird somit ausgelagert, z. B. in den Kofferraum oder Fond des Fahrzeugs. Die einzelnen Module sind hierbei aus Gründen der elektromagnetischen Verträglichkeit sowie aus Gewichtsgründen über einen optischen Bus miteinander verbunden. Der Leistungsverbrauch der Module ist allerdings relativ hoch, so daß er bei abgeschalteter Zündung des Kraftfahrzeugs oberhalb eines von der Kraftfahrzeugindustrie vorgegebenen minimalen Grenzwertes liegen kann, was unerwünscht ist. Andererseits müssen trotz abgeschalteter Zündung des Kraftfahrzeugs alle Module in der Lage sein, sich gegenseitig zu aktivieren.

Es wurde bereits vorgeschlagen, bei in einem Kraftfahrzeug vorhandenen Modulen, die über einen optischen Bus miteinander verbunden sind, ein elektrisches Kabel parallel zum optischen Bus zu verlegen. Bei abgeschalteter Zündung des Kraftfahrzeugs werden dann die einzelnen Module komplett abgeschaltet. Sollen jetzt die Module wieder aktiviert werden, so wird zu diesem Zweck ein Aufwecksignal über das elektrische Kabel gesendet.

Infolge des zusätzlich zwischen den Modulen verlegten elektrischen Kabels fallen jedoch höhere Kabel- und Montagekosten an, und es vergrößert sich das Gesamtgewicht der in Rede stehenden Einrichtung. Andererseits liegt dann eine galvanische Verbindung zwischen den Modulen vor, die aus Sicht der elektromagnetischen Verträglichkeit ungünstig ist und die Vorteile eines optischen Busses insbesondere in Hinblick auf die galvanische Entkopplung teilweise wieder aufhebt.

Der Erfindung liegt die Aufgabe zugrunde, die oben beschriebenen Nachteile zu überwinden und dafür zu sorgen, daß ein Aufwecken aus einem Energiesparmodus in einfacherer und kostengünstigerer Weise durchgeführt werden kann.

Das Verfahren nach der Erfindung zur Steuerung einer elektronischen Einrichtung, die wenigstens zwei über einen optischen Bus miteinander verbundene Module aufweist, umfaßt folgende Schritte:
- in einem Energiesparmodus wird jedes der Module mit einer für alle Module selben Abtastperiode und über ein gegenüber dieser Abtastperiode kleines Abtastzeitintervall auf Empfang geschaltet.
- eines dieser Module sendet ein Interrupt-Signal auf den optischen Bus, dessen Dauer gleich der oder größer als die Abtastperiode ist, und
- wenigstens ein anderes dieser Module wird beim Empfang des Interrupt-Signals im nächstfolgenden Abtastzeitintervall auf permanenten Empfang umgeschaltet.

Nach der Erfindung ist es somit möglich, das Aufwecken der Module aus dem Energiesparmodus nur unter Verwendung des optischen Busses zwischen den Modulen vornehmen zu können, ohne das es erforderlich ist, zwischen den Modulen eine zusätzliche elektrische Leitung zu verlegen. Dadurch verringern sich die Herstellungskosten der elektronischen Einrichtung und ihre Montagekosten erheblich. Zwar müssen die optischen Empfänger der einzelnen Module im Energiesparmodus periodisch auf Empfang geschaltet werden, was jedoch den gesamten Leistungsverbrauch der Einrichtung in diesem Modus nur unwesentlich vergrößert und nicht dazu führt, daß vorgegebene Leistungsgrenzen überschritten werden. Durch Steuerung der Periodendauer der Abtastperiode läßt sich darüber hinaus der Leistungsverbrauch der jeweiligen Module einstellen, so daß hinsichtlich zu unterschreitender Leistungsgrenzen sogar eine gewisse Flexibilität vorhanden ist.

Im Hinblick auf die Abtastperioden der jeweiligen Module sei erwähnt, daß diese nicht unbedingt dieselbe Phase aufweisen müssen. Wichtig ist nur, daß ihre Periodendauer dieselbe ist.

Als Energiesparmodus kann ein solcher bezeichnet werden, bei dem eine mit dem optischen Empfänger und dem optischen Sender verbundene Modul-Betriebssteuerung sowie der optische Sender selbst permanent abgeschaltet sind, also nicht mit einer Versorgungsspannung versorgt werden, oder sich in einem nur wenig Leistung verbrauchenden Standby Zustand befinden.

Gehören zur elektronischen Einrichtung mehr als zwei Module, so kann das von einem der Module erzeugte Interrupt-Signal sämtlichen anderen Modulen gleichzeitig zugesandt werden. Diese anderen Module werden dann bei Empfang des Interrupt-Signals im nächstfolgenden Abtastzeitintervall auf permanenten Empfang umgeschaltet. Im Falle der gleichzeitigen Zusendung des Interrupt-Signals zu allen anderen zur elektronischen Einrichtung gehörenden Modulen liegen sämtliche Module am optischen Bus parallel.

Nach einer Ausgestaltung der Erfindung wird auch das das Interrupt-Signal aussendende eine Modul mit dem Aussenden des Interrupt-Signals auf permanenten Empfang umgeschaltet. Die Umschaltung auf permanenten Empfang erfolgt also schon zu einem sehr frühen Zeitpunkt, so daß schon unmittelbar danach ein von irgendeinem der anderen Module ausgehendes Bestätigungssignal über den erfolgten Aufweckvorgang vom aufweckenden Modul empfangen werden kann. Eine Datenkommunikation zwischen den einzelnen Modulen kann daher schon sehr frühzeitig beginnen. Dabei wird das infolge des empfangenen Interrupt-Signals ausgesandte Bestätigungssignal ebenfalls auf den optischen Bus gelegt.

Vorzugsweise wird nach dem Aussenden der Bestätigungssignale aller aufgeweckten Module mit einer danach beginnenden Datenkommunikation zwischen den Modulen solange gewartet, bis ein Sicherheitszeitraum verstrichen ist. Dieser Sicherheitszeitraum wird so lang gewählt, bis alle Module innerhalb dieses Sicherheitszeitraums einen definierten aktiven Betriebszustand erreicht haben.

Als Bestätigungssignal kann ein auf konstantem z. B. hohen logischen Pegel liegendes Signal erzeugt werden, das auch dem Interrupt-Signal entsprechen bzw. gleichen kann. Ist das Bestätigungssignal kürzer als das Interrupt-Signal, kann mit einer Datenkommunikation ggf. früher begonnen werden.

Gehören zur elektronischen Einrichtung mehr als zwei Module, so können diese auch über den optischen Bus in Reihe miteinander verbunden sein. Bei mehr als zwei Modulen kann daher das Interrupt-Signal des einen Moduls nur einem der anderen Module zugesandt werden, um dieses im nächstfolgenden Abtastzeitintervall auf permanenten Empfang umzuschalten, wobei dieses andere Modul nach Empfang des Interrupt-Signals seinerseits ein Interrupt-Signal auf den optischen Bus sendet, das einem noch anderen der Module zugesandt wird, um dann dieses noch andere Modul im nächstfolgenden Abtastzeitintervall auf permanenten Empfang umzuschalten, usw.. Die am optischen Bus liegenden Module werden somit nacheinander auf permanenten Empfang umgeschaltet, bis auch das letzte Modul diesen Zustand erreicht hat und seinerseits ein Interrupt-Signal zu demjenigen ersten Modul zurücksendet. das das Interrupt-Signal zuerst ausgesandt hat. Das genannte eine Modul kann dann mit Empfang des Interrupt-Signals vom letzten Modul im nächstfolgenden Abtastzeitintervall auf permanenten Empfang umgeschaltet werden oder, alternativ, mit seinem ersten Aussenden des Interrupt-Signals.

Nach Empfang des Interrupt-Signals durch das eine Modul, das das Interrupt-Signal zuerst ausgesendet hat, wird mit einer dann beginnenden Datenkommunikation zwischen den Modulen solange gewartet, bis ein Sicherheitszeitraum verstrichen ist, in welchem alle Module einen definierten aktiven Betriebszustand erreicht haben.

Abhängig von einem Befehlssignal können die jeweiligen Module wieder in den Energiesparmodus umgeschaltet werden. Dies kann durch externe Ansteuerung der einzelnen Module oder durch interne Ansteuerung erfolgen, beispielsweise programmgesteuert. Das Befehlssignal kann bei Kraftfahrzeugen ein "Zündung AUS" - Signal sein.

Wichtig für das einwandfreie Funktionieren des Verfahrens ist es, daß die zeitliche Dauer des Interrupt-Signals mindestens gleich, vorzugsweise aber größer ist als die Periodendauer der Abtastperiode zum Abtasten des optischen Busses durch die jeweiligen Module. In diesem Fall wird sichergestellt, daß von allen Modulen mindestens ein Abtastsignal einmal in den zeitlichen Rahmen des Interrupt-Signals fällt.

Bei einer elektronischen Einrichtung nach der Erfindung mit mehreren Modulen, die zur Datenkommunikation über einen optischen Bus miteinander verbunden sind, enthält jedes Modul folgendes:
- einen optischen Empfänger und einen optischen Sender, die beide mit dem optischen Bus verbunden sind,
- eine mit dem optischen Empfänger und dem optischen Sender verbundene Modul-Betriebssteuerung, und
- eine Energiesparmodus-Kontrolleinheit, die im Falle eines Energiesparmodus die Modul-Betriebssteuerung und den optischen Sender abschaltet, und die ferner mit dem optischen Empfänger verbunden ist, um diesen im Energiesparmodus periodisch einzuschalten und um ein von ihm empfangenes Signal zu erkennen, sowie mit dem optischen Sender verbunden ist, um diesem ein Signal zwecks Aussendung zuzuleiten.

Das Signal, das von der Energiesparmodus-Kontrolleinheit zum optischen Sender lieferbar ist, kann ein Interrupt-Signal sein, dessen Dauer gleich der oder größer als die Abtastperiode der optischen Empfänger ist. Dieses Interrupt-Signal kann auf konstantem, z. B. hohen logischem Pegel liegen, also in Form eines DC-Signals oder in Form eines bestimmten Bitmusters vorliegen. Andererseits kann nach erfolgtem Aufweckvorgang die Energiesparmodus-Kontrolleinheit als Signal zum optischen Sender auch ein Bestätigungssignal liefern, das dem Interrupt-Signal entsprechen oder, insbesondere bei parallel zum optischen Bus liegenden Modulen auch kürzer als dieses sein kann. Dagegen kann über den optischen Empfänger ein Interrupt-Signal von einem anderen Modul abgetastet werden, oder es wird über diesen optischen Empfänger für den Fall, daß sein Modul ein Interrupt-Signal ausgegeben hat, ein Bestätigungssignal von einem anderen Modul empfangen und zur Energiesparmodus-Kontrolleinheit weitergeleitet.

Prinzipiell wäre es nicht erforderlich, daß das das Interrupt-Signal aussendende Modul von den anderen Modulen ein Bestätigungssignal über den erfolgten Aufweckvorgang empfangen muß. Die Datenkommunikation zwischen den Modulen könnte auch nach Ablauf einer vorgegebenen Sicherheitszeitspanne nach Beendigung des Interrupt-Signals aufgenommen werden.

Die Datenkommunikation zwischen den Modulen erfolgt, wie bereits erwähnt, mit Hilfe der Modul-Betriebsteuerung, die z. B. eine mit dem optischen Empfänger und dem optischen Sender verbundene Sende-/Empfangseinheit aufweist, die ihrerseits mit einer Datenverarbeitungseinheit verbunden sein kann. Dabei bestehen der optische Empfänger und der optische Sender im wesentlichen aus Einrichtungen zur Umwandlung optischer Signale in elektrischer Signale bzw. zur Umwandlung elektrischer Signale in optische Signale.

Als optischer Bus zwischen den jeweiligen Modulen kann nur eine einzige optische Faser vorhanden sein, die eine Signalübertragung in unterschiedliche Richtungen ermöglicht. In jedem der Module müssen dann Koppelelemente enthalten sein, um Signale aus der optischen Faser auf den optischen Empfänger auskoppeln zu können, und um Signale vom optischen Sender in die optische Faser einkoppeln zu können. Alternativ können zwischen den Modulen aber auch mehrere optische Fasern verlegt sein, um den optischen Bus aufzubauen, so daß über sie eine Signalübertragung in unterschiedlichen Richtungen möglich ist.

Sind nur zwei Module vorhanden, wäre somit ein optischer Empfänger des einen Moduls über eine Faser mit dem optischen Sender des anderen Moduls verbunden, während der optische Empfänger des anderen Moduls über eine andere Faser mit dem optischen Sender des einen Moduls verbunden wäre.

Gehören zur elektronischen Einrichtung mehr als zwei Module, so können diese über den optischen Bus aber auch ringförmig miteinander verbunden sein. Der optische Bus erstreckt sich also ringförmig zwischen den Modulen, und zwar immer so, daß ein Sender eines Moduls mit einem Empfänger eines anderen Moduls verbunden ist. Das weckende Modul weckt daher infolge der Aussendung des Interrupt-Signals nur ein benachbart zu ihm liegendes Modul auf, das seinerseits ein Interrupt-Signal als Aufwecksignal zu einem noch anderen Modul sendet, usw., bis sämtliche Module aufgeweckt worden sind.

Selbstverständlich kann die erfindungsgemäße Einrichtung nicht nur in einem Kraftfahrzeug zum Einsatz kommen sondern auch an anderer Stelle, beispielsweise in Gebäuden, Anlagen, Flugzeugen, und dergleichen.

Die Erfindung wird nachfolgend unter Bezugnahme auf die Zeichnungen im einzelnen beschrieben. Es zeigen:
**Figur 1** den Einsatz einer erfindungsgemäßen Einrichtung in einem Kraftfahrzeug;
**Figur 2** ein Blockschaltbild der erfindungsgemäßen Einrichtung mit zwei Modulen:
**Figur 3** ein Signaldiagramm zur Erläuterung der Betriebsweise der Einrichtung nach Figur 2; und
**Figur 4** ein Blockschaltbild einer erfindungsgemäßen Einrichtung mit mehr als zwei Modulen an einem ringförmigen optischen Bus.

Nachfolgend werden Ausführungsbeispiele der vorliegenden Erfindung im einzelnen erläutert.

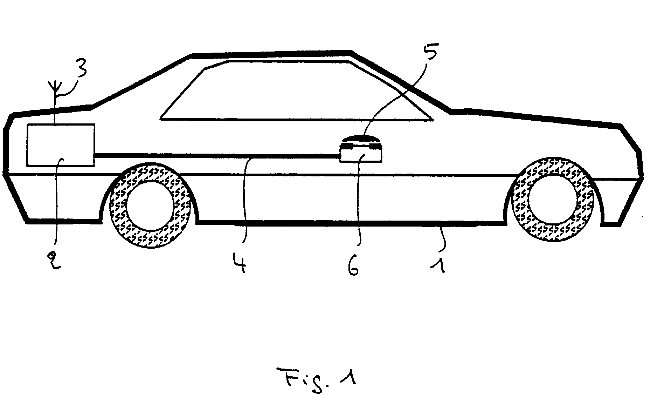

Gemäß Figur 1 kommt die Erfindung z. B. in einem Kraftfahrzeug 1 zum Einsatz, in dessen Kofferraum sich eine Kommunikationseinheit 2 befindet, die z. B. ein Telefon sein kann, und die in der Lage ist über eine Antenne 3 mit einer Basisstation zu kommunizieren. Die Kommunikationseinheit 2 ist über einen optischen Bus 4 mit einem Handsprechapparat 5 verbunden, der sich z. B. auf der vorderen Mittelkonsole des Kraftfahrzeugs 1 befindet. Der Handsprechapparat 5 kann auf einer Ablage 6 abgelegt werden.

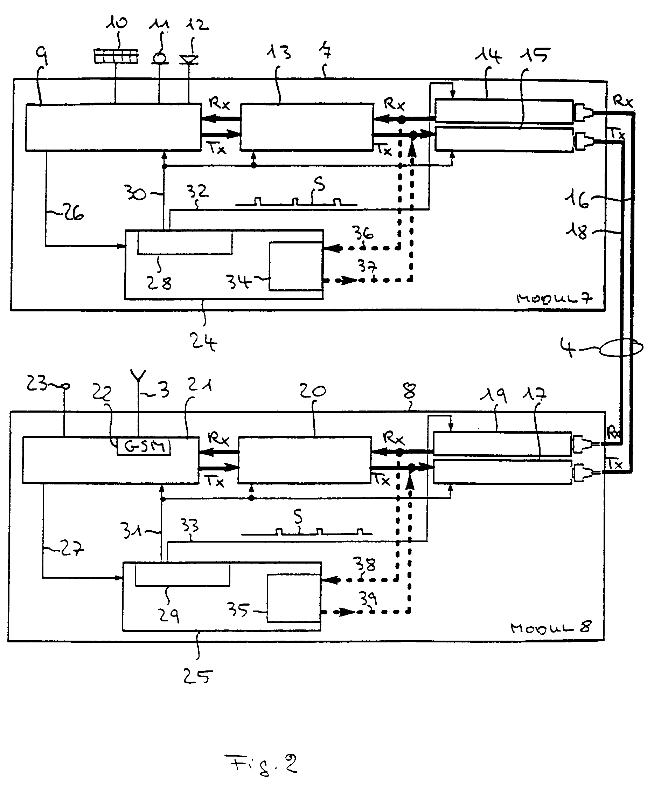

Die Figur 2 zeigt die schaltungstechnische Ausgestaltung der elektronischen Einrichtung nach Figur 1.

Über den optischen Bus 4 stehen ein erstes Modul 7 und ein zweites Modul 8 miteinander in Verbindung. Das erste Modul 7 befindet sich dabei im Handapparat 5, während sich das zweite Modul 8 in der Kommunikationseinheit 2 befindet.

Zum ersten Modul 7 gehören eine Datenverarbeitungseinrichtung 9 und mit ihr verbunden ein Tastenfeld 10 zur Eingabe von Ziffern und Buchstaben, ein Mikrofon 11 und ein Lautsprecher 12. Über RX und TX Leitungen steht die Datenverarbeitungseinrichtung 9 mit einer Sende-/Empfangseinheit 13 in Verbindung, die ihrerseits über RX und TX Leitungen jeweils mit einem optischen Empfänger 14 und einem optischen Sender 15 in Verbindung steht. Die RX Leitungen bezeichnen Empfangsleitungen, während die TX Leitungen Sendeleitungen bezeichnen. Die Sende-/Empfangseinheit 13 dient zur Umsetzung empfangener Daten gemäß einem vorgegebenen Übertragungsprotokoll, während es sich beim optischen Empfänger 14 und beim optischen Sender 15 um Einrichtungen handelt, die optische Signale in elektrische Signale bzw. elektrische Signale in optische Signale umsetzen.

Eingangsseitig ist der optische Empfänger 14 über eine zum optischen Bus 4 gehörende Faser 16 mit dem Ausgang eines optischen Senders 17 verbunden, der sich im zweiten Modul 8 befindet. Dagegen ist die Ausgangsseite des optischen Senders 15 im ersten Modul 7 über eine weitere zum optischen Bus 4 gehörende Faser 18 mit der Eingangsseite eines optischen Empfängers 19 verbunden, der sich ebenfalls im zweiten Modul 8 befindet. Der optische Empfänger 19 und der optische Sender 17 im zweiten Modul 8 sind jeweils über RX und TX Leitungen mit einer Sende-/Empfangseinheit 20 im zweiten Modul 8 verbunden, die ihrerseits über RX und TX Leitungen mit einer weiteren und ebenfalls im zweiten Modul 8 vorhandenen Datenverarbeitungseinrichtung 21 verbunden ist. Diese Datenverarbeitungseinrichtung 21 enthält eine GSM Einheit 22, die ihrerseits mit der bereits genannten Antenne 3 verbunden ist. Insofern ist nunmehr eine Kommunikation eines Benutzers des Handsprechapparates 5 über die Eingabeschnittstelle 10, 11 und 12 und die GSM Einheit 22 mit angeschlossener Antenne 3 mit einem anderen Teilnehmer möglich.

Die Datenverarbeitungseinrichtung 21 weist ferner noch einen Dateneingangsanschluß 23 auf, über den Information über den Zustand der Zündung (EIN/AUS) des Kraftfahrzeugs eingebbar ist.

Ansonsten ist in jedem der Module 7, 8 eine Energiesparmodus-Kontrolleinheit 24, 25 vorhanden. Jede der Energiesparmodus-Kontrolleinheiten 24, 25 kann über eine Leitung 26, 27 ein Energiesparmodus-Kontrollsignal von der zugehörigen Datenverarbeitungseinrichtung 9 bzw. 21 empfangen. Andererseits enthält jede Energiesparmodus-Kontrolleinheit 24, 25 eine Überwachungseinheit 28, 29 zur Überwachung der Energieversorgung von Datenverarbeitungseinrichtung 9, Sende-/Empfangseinheit 13 und optischem Sensor 15 einerseits bzw. zur Überwachung der Energieversorgung von Datenverarbeitungseinrichtung 21, Sende-/Empfangseinheit 20 und optischem Sender 17 andererseits. Hierzu steht die Überwachungseinheit 28 über Leitungen 30 mit den Einheiten 9, 13 und 15 in Verbindung, während die Überwachungseinheit 29 zu diesem Zweck über Leitungen 31 mit den Einheiten 21, 20 und 17 in Verbindung steht.

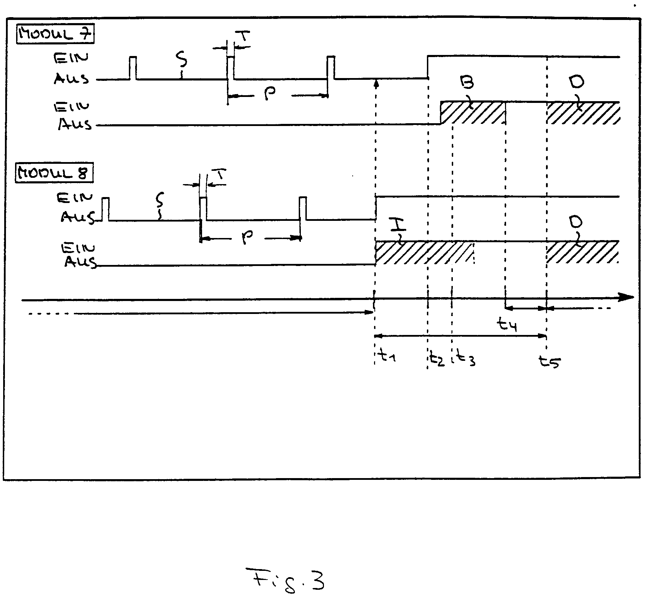

Die Überwachungseinheit 28 ist ferner über eine Leitung 32 mit dem optischen Empfänger 14 verbunden, während andererseits die Überwachungseinheit 29 über eine Leitung 33 mit dem optischen Empfänger 19 verbunden ist. Über diese Leitungen 32, 33 werden die optischen Empfänger 14, 19 im Energiesparmodus periodisch auf Empfang geschaltet, um Interrupt-Signale bzw. Aufwecksignale auf dem optischen Bus 4 detektieren zu können. Dies wird weiter unter näher erläutert. Die Schaltsignale zum periodischen Einschalten der optischen Empfänger 14 und 19 sind in Figur 2 mit dem Bezugszeichen S versehen. Es handelt sich hier um eine Pulsfolge mit der Pulsperiode P (siehe Figur 3), die auch als Abtastperiode bezeichnet wird. Die Pulsbreite T entspricht einem Abtastzeitintervall.

Nicht zuletzt enthält jede der Energiesparmodus-Kontrolleinheiten 24, 25 jeweils eine Aufweckkontrolleinheit 34, 35. Dabei steht die Aufweckkontrolleinheit 34 über eine RX Leitung 36 mit dem Ausgang des optischen Empfängers 14 einerseits und über eine TX Leitung 37 mit dem Eingang des optischen Senders 15 andererseits in Verbindung. Ferner steht die Aufweckkontrolleinheit 35 über eine RX Leitung 38 mit dem Ausgang des optischen Empfängers 19 einerseits und andererseits über eine TX Leitung 39 mit dem Eingang des optischen Senders 17 andererseits in Verbindung. Über die TX Leitungen 37 und 39 können Interrupt-Signale bzw. Aufwecksignale oder aber auch Bestätigungssignale, die sich von den Interrupt-Signalen unterscheiden können oder nicht, auf den optischen Bus 4 gegeben werden. Durch die Bestätigungssignale wird bestätigt, daß das angerufene Modul sich im aufgewecktem Zustand befindet. Andererseits können über die RX Leitungen 36 und 38 Signale von den Aufweckkontrolleinheiten 34, 35 empfangen werden, die das Vorhandensein eines Interrupt-Signals (Aufwecksignal) auf dem optischen Bus 4 melden, oder die selbst Bestätigungssignale sind.

Die Funktionsweise der in den Figuren 1 und 2 gezeigten Schaltung wird nachfolgend unter Bezugnahme auf das in Figur 3 dargestellte Signaldiagramm näher erläutert.

Im folgenden sei angenommen, daß die Datenverarbeitungseinrichtung 21 über den Dateneingangsanschluß 23 des zweiten Moduls 8 ein Signal empfängt, das angibt, daß die Zündung des Kraftfahrzeugs 1 ausgeschaltet ist. Diese Information wird einerseits über die Leitung 27 zur Energiesparmodus-Kontrolleinheit 25 geliefert und andererseits über den optischen Bus 4, die Datenverarbeitungseinrichtung 9 und die Leitung 26 zur Energiesparmodus-Kontrolleinheit 24. Danach werden durch diejeweiligen Überwachungseinheiten 28 und 29 der Energiesparmodus-Kontrolleinheiten 24 und 25 einerseits die Elemente 9, 13 und 15 sowie andererseits die Elemente 21, 20 und 17 in einen Standby-Betriebszustand überführt, in welchem sie praktisch keine Leistung mehr verbrauchen. Die optischen Sender 15 und 17 können auch ausgeschaltet werden.

Die Überwachungseinheiten 28 und 29 senden dann auf den Leitungen 32 und 33 jeweils das Schaltsignal S zum zugeordneten optischen Empfänger 14 bzw. 19, um die optischen Empfänger periodisch einzuschalten, damit diese den Signalverkehr auf dem optischen Bus 4 abhören können. Die Schaltsignale S auf den Leitungen 32 und 33 weisen dieselbe Schaltperiode und dieselben Schaltpulse auf, können sich jedoch in ihrer Phase voneinander unterscheiden. Diesbezüglich ist also keine Synchronisation zwischen den Schaltsignalen S auf den Leitungen 32 und 33 nötig.

Bis zum Zeitpunkt t1 in Figur 3 ist somit der Energiesparmodus aktiv. Zum Zeitpunkt t1 erzeugt die Aufweckkontrolleinheit 35 ein Interrupt-Signal auf der Leitung 39, das zum optischen Sender 17 übertragen wird. Dieses Interrupt-Signal kann z. B. aufgrund einer Bedarfanforderung des GSM Systems 22 erzeugt werden, wozu eine entsprechende Information über die Leitung 27 zur Energiesparmodus-Kontrolleinheit 25 geliefert wird, die daraufhin die Einheiten 21, 20 und 17 aktiviert bzw. vollständig einschaltet.

Dieses Interrupt-Signal wird auf die Faser 16 des optischen Busses 4 gegeben und weist eine zeitliche Dauer auf, die wenigstens gleich, vorzugsweise aber größer ist als die Periode des Schaltsignals S. Das Interrupt-Signal ist in Figur 3 mit dem Bezugszeichen I versehen und weist einen konstanten hohen logischen Pegel auf. Gleichzeitig mit dem Ausgeben des Interrupt-Signals I auf der Leitung 39 veranlaßt die Überwachungseinheit 29 eine Änderung des Schaltsignals S. Dieses Schaltsignal S auf der Leitung 33 nimmt dann einen konstanten hohen logischen Pegel ein, so daß der optische Empfänger 19 permanent eingeschaltet bleibt.

Wird zum Zeitpunkt t2 durch den nächsten Puls des Schaltsignals S auf der Leitung 32 der optische Empfänger 14 des ersten Moduls 7 eingeschaltet, so wird das auf hohem logischen Pegel liegende Signal auf der Faser 16 über die Leitung 36 zur Aufweckkontrolleinheit 34 übertragen. Diese interpretierte das empfangene Signal als Aufwecksignal und veranlaßt, daß die Überwachungseinheit 28 nunmehr auf der Leitung 32 das Schaltsignal auf hohen logischen Pegel hebt, so daß der optische Empfänger 14 permanent eingeschaltet bleibt. Gleichzeitig werden durch die Überwachungseinheit 28 auf Veranlassung der Aufweckkontrolleinheit 34 die Einheiten 9, 13 und 15 aktiviert bzw. vollständig eingeschaltet. Kurze Zeit später gibt die Aufweckkontrolleinheit 34 auf der Leitung 37 ein Bestätigungssignal B aus, das ein auf hohem logischen Pegel liegendes Signal ist und über den optischen Sender 15 auf die Faser 18 des optischen Busses 4 gegeben wird. Dieses Bestätigungssignal B, das kürzer als das Interrupt-Signal I sein kann, wird vom optischen Empfänger 19 detektiert und über die Leitung 38 zur Aufweckkontrolleinheit 35 geliefert, so daß diese zum Zeitpunkt t3 die vom ersten Modul 7 erhaltene Bestätigung erkennt.

Nach Ende des Bestätigungssignals B zum Zeitpunkt t4 wird noch über eine vorbestimmte Zeitperiode bis zum Zeitpunkt t5 gewartet, bevor ein Austausch von Daten D über den optischen Bus 4 unter Verwendung der Einheiten 9, 13 bzw. 21, 20 erfolgt. Die Zeitspanne zwischen t1 und t5 wird allgemein als Aufweckzeit bezeichnet.

Im vorliegenden Fall wurde beschrieben, daß über die Leitung 27 des zweiten Moduls 8 der Befehl zur Erzeugung eines Interrupt-Signals I geliefert wird. Statt dessen kann dieser aber auch über die Schnittestelle 10, 11, 12 eingegeben und über die Leitung 26 des ersten Moduls 7 zur Energiesparmodus-Kontrolleinheit 24 geliefert werden, so daß dann die Vorgänge in umgekehrter Reihenfolge ablaufen.

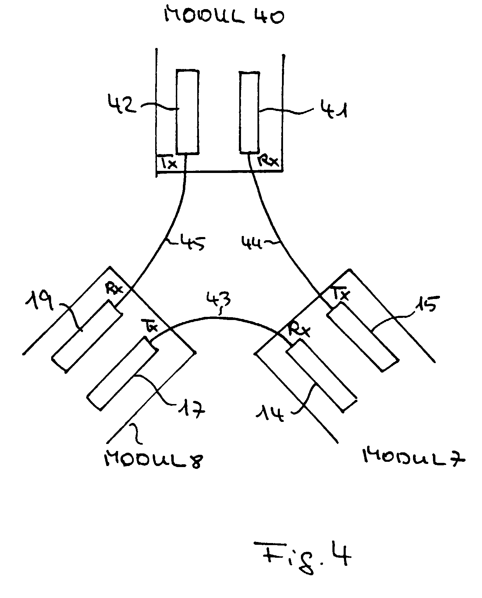

Die Figur 4 zeigt eine weitere Ausgestaltung der erfindungsgemäßen Einrichtung mit drei Modulen an einem ringförmigen optischen Bus.

Die Module 7, 8 und 40 entsprechen in ihrem Aufbau den Modulen 7 und 8 von Figur 2. Dieser Aufbau wird daher an dieser Stelle nicht nochmals beschrieben.

Im einzelnen ist der Ausgang des optischen Senders 17 des Moduls 8 über eine optische Faser 43 mit dem Eingang des optischen Empfängers 14 des Moduls 7 verbunden. Der Ausgang des optischen Senders 15 des Moduls 7 ist über eine optische Faser 44 mit dem Eingang eines optischen Empfängers 41 des Moduls 40 verbunden. Dagegen ist der Ausgang eines optischen Senders 42 des Moduls 40 über eine optische Faser 45 mit dem Eingang des optischen Empfängers 19 des Moduls 8 verbunden.

Gibt z. B. das Modul 8 über seinen optischen Sender 17 das aufweckende Interrupt-Signal I aus, so wird dieses im nächstfolgenden Abtastzeitintervall T vom optischen Empfänger 14 des Moduls 7 detektiert, der damit auf permanenten Empfang umgeschaltet wird. Kurze Zeit später gibt das Modul 7 über seinen optischen Sender 15 ebenfalls ein Interrupt-Signal I auf die optische Faser 44, das identisch zum zuerst genannten Interrupt-Signal ist. Dieses über die optische Faser 44 gesendete Interrupt-Signal wird im nächstfolgenden Abtastzeitintervall T vom optischen Empfänger 41 des Moduls 40 detektiert, das daraufhin auf permanenten Empfang umgeschaltet wird. Kurz darauf gibt dann auch das Modul 40 über seinen optischen Sender 42 ein identisches Interrupt-Signal auf die optische Faser 45, das im nächstfolgenden Abtastzeitintervall T vom optischen Empfänger 19 des Moduls 8 empfangen wird. Zu diesem Zeitpunkt kann das Modul 8 spätestens auf permanenten Empfang umgeschaltet werden, aber auch schon früher, und zwar mit Aussenden seines Interrupt-Signals über den optischen Sender 17.

Wie bereits erwähnt, werden sämtliche Module 7, 8 und 40 ständig mit derselben Abtastperiode P und über ein gegenüber dieser Abtastperiode P kleines Abtastzeitintervall T auf Empfang geschaltet. Sämtliche Interrupt-Signale auf den Fasern 43, 44 und 45 müssen daher eine Dauer aufweisen, die gleich oder größer ist als diese Abtastperiode P. Vorzugweise sind alle Interrupt-Signale identisch.

Ansonsten entspricht die Funktionsweise der in Figur 4 gezeigten Anordnung derjenigen von Figur 2, so daß auf eine nochmalige Beschreibung verzichtet werden kann.

## Patentansprüche

1. Verfahren zur Steuerung einer elektronischen Einrichtung, die wenigstens zwei über einen optischen Bus (4) miteinander verbundene Module (7, 8) aufweist, mit folgenden Schritten:
- in einem Energiesparmodus wird jedes der Module (7, 8) mit einer für alle Module (7, 8) selben Abtastperiode (P) und über ein gegenüber dieser Abtastperiode (P) kleines Abtastzeitintervall (T) auf Empfang geschaltet,
- eines dieser Module (7, 8) sendet ein Interrupt-Signal (I) auf den optischen Bus (4), dessen Dauer gleich der oder größer als die Abtastperiode (P) ist, und
- wenigstens ein anderes dieser Module (7, 8) wird beim Empfang des Interrupt-Signals (I) Im nächstfolgenden Abtastzeitintervall (T) auf permanenten Empfang umgeschaltet.

2. Verfahren nach Anspruch 1, **dadurch gekennzeichnet,** daß bei mehr als zwei Modulen sämtlichen anderen Modulen das Interrupt-Signal (I) gleichzeitig zugesandt wird, so daß diese anderen Module bei Empfang des Interrupt-Signals (I) im nächstfolgenden Abtastzeitintervall (T) auf permanenten Empfang umgeschaltet werden können.

3. Verfahren nach Anspruch 1 oder 2, **dadurch gekennzeichnet,** daß das Interrupt-Signal (I) aussendende Modul (8) mit dem Aussenden des Interrupt-Signals (I) auf permanenten Empfang umgeschaltet wird.

4. Verfahren nach Anspruch 1, 2 oder 3, **dadurch gekennzeichnet,** daß diejenigen Module (7), die das Interrupt-Signal (I) empfangen haben, ein Bestätigungssignal (B) auf den optischen Bus (4) senden.

5. Verfahren nach Anspruch 4, **dadurch gekennzeichnet,** daß nach Aussenden aller Bestätigungssignale (B) der genannten Module mit einer dann beginnenden Datenkommunikation zwischen den Modulen (7, 8) solange gewartet wird, bis ein Sicherheitszeitraum (t4-t5) vorrüber ist.

6. Verfahren nach Anspruch 4 oder 5, **dadurch gekennzeichnet,** daß als Bestätigungssignale Interrupt-Signale oder solche gesendet werden, die kürzer als die Interrupt-Signale sind.

7. Verfahren nach Anspruch 1, **dadurch gekennzeichnet,** daß bei mehr als zwei Modulen das Interrupt-Signal (I) des einen Moduls nur einem der anderen Module zugesandt wird, um dieses im nächstfolgenden Abtastzeitintervall (T) auf permanenten Empfang umzuschalten, daß dieses andere Modul nach Empfang des Interrupt-Signals seinerseits ein Intnerrupt-Signal auf den optischen Bus sendet, das einem noch anderen der Module zugesandt wird, um dieses im nächstfolgenden Abtastzeitintervall (T) auf permanenten Empfang umzuschalten, usw..

8. Verfahren nach Anspruch 7, **dadurch gekennzeichnet,** daß das eine Modul, welches das Interrupt-Signal (I) zuerst aussendet, ein vom letzten der anderen Module ausgesandtes Interrupt-Signal (I) empfängt.

9. Verfahren nach Anspruch 8, **dadurch gekennzeichnet,** daß das genannte eine Modul mit Empfang des Interrupt-Signals (I) im nächstfolgenden Abtastzeitintervall (T) auf permanenten Empfang umgeschaltet wird.

10. Verfahren nach Anspruch 7 oder 8, **dadurch gekennzeichnet,** daß das eine Modul, welches das Interrupt-Signal (I) zuerst aussendet, mit dem Aussenden des Interrupt-Signals (I) auf permanenten Empfang umgeschaltet wird.

11. Verfahren nach Anspruch 8, 9 oder 10, **dadurch gekennzeichnet,** daß nach Empfang des Interrrupt-Signals (I) durch das eine Modul mit einer dann beginnenden Datenkommunikation zwischen den Modulen solange gewartet wird, bis ein Sicherheitszeitraum vorrüber ist.

12. Verfahren nach einem der Ansprüche 1 bis 11, **dadurch gekennzeichnet,** daß die Module (7,8) in Abhängigkeit eines Befehlssignals wieder auf den Energiesparmodus umgeschaltet werden.

13. Elektronische Einrichtung mit mehreren Modulen (7, 8), die zur Datenkommunikation über einen optischen Bus (4) miteinander verbunden sind, und bei der jedes Modul (7, 8) folgendes enthält:
- einen optischen Empfänger (14, 19) und einen optischen Sender (15, 17), die beide mit dem optischen Bus (4) verbunden sind,
- eine mit dem optischen Empfänger (14, 19) und dem optischen Sender (15, 17) verbundene Modul-Betriebssteuerung (9, 13; 20, 23), und
- eine Energiesparmodus-Kontrolleinheit (24, 25), die im Falle eines Energiesparmodus die Modul-Betriebssteuerung und den optischen Sender (15, 17) abschaltet, und die ferner mit dem optischen Empfänger (14, 19) verbunden ist, um diesen im Energiesparmodus periodisch einzuschalten und um ein von ihm empfangenes Signal (I, B) zu erkennen, sowie mit dem optischen Sender (15, 17) verbunden ist, um diesem ein Signal (I, B) zwecks Aussendung zuzuleiten.

14. Elektronische Einrichtung nach Anspruch 13, **dadurch gekennzeichnet,** daß durch die Energiesparmodus-Kontrolleinheit (24, 25) Interrupt-Signale mit einer Dauer ausgebbar sind, die gleich der oder größer als die Einschaltperiode (P) des optischen Empfängers (14, 19) ist.

15. Elektronische Einrichtung nach Anspruch 14, **dadurch gekennzeichnet,** daß durch die Energiesparmodus-Kontrolleinheit (24, 25) Bestätigungssignale (B) über ein erfolgtes Aufwecken ausgebbar sind.

16. Elektronische Einrichtung nach Anspruch 15, **dadurch gekennzeichnet,** daß die Bestätigungssignale den Interrupt-Signalen entsprechen.

17. Elektronische Einrichtung nach Anspruch 14, 15 oder 16, **dadurch gekennzeichnet**, daß die Interrupt-Signale bzw. Bestätigungssignale einen konstanten logischen Pegel aufweisen.

18. Elektronische Einrichtung nach einem der Ansprüche 13 bis 17, **dadurch gekennzeichnet,** daß die Modul-Betriebssteuerung eine mit dem optischen Empfänger (14, 19) und dem optischen Sender (15, 17) verbundene Sende-/Empfangseinheit (13, 20) aufweist.

19. Elektronische Einrichtung nach Anspruch 18, **dadurch gekennzeichnet,** daß mit der Sende-/Empfangseinheit (13, 20) eine Datenverarbeitungseinrichtung (9, 21) verbunden ist.

20. Elektronische Einrichtung nach einem der Ansprüche 13 bis 19, **dadurch gekennzeichnet,** daß der optische Bus (4) mehrere optische Fasern (16, 18) bzw. Kanäle zum Senden von Signalen in unterschiedlichen Richtungen aufweist.

21. Elektronische Einrichtung nach einem der Ansprüche 13 bis 20, **dadurch gekennzeichnet,** daß bei mehr als zwei Modulen der optische Bus ringförmig zwischen den Modulen verläuft, und zwar immer vom Sender eines Moduls zum Empfänger eines anderen Moduls.
